(19) Europäisches Patentamt
European Patent Office
Office européen des brevets

(11) Numéro de publication : **0 314 102 B1**

(12) **FASCICULE DE BREVET EUROPEEN**

(45) Date de publication du fascicule du brevet :
09.10.91 Bulletin 91/41

(51) Int. Cl.⁵ : **B65G 1/08**, B65G 1/137,
G07F 11/26

(21) Numéro de dépôt : **88117840.4**

(22) Date de dépôt : **26.10.88**

(54) **Magasin linéaire de stockage et de distribution automatique d'objets.**

(30) Priorité : 30.10.87 FR 8715078

(43) Date de publication de la demande :
03.05.89 Bulletin 89/18

(45) Mention de la délivrance du brevet :
09.10.91 Bulletin 91/41

(84) Etats contractants désignés :
AT BE CH DE ES FR GB GR IT LI LU NL SE

(56) Documents cités :
DE-A- 2 226 769
US-A- 3 734 345

(73) Titulaire : Guigan, Jean
9, rue Jean Mermoz
F-75008 Paris (FR)
Titulaire : Guigan, Franck
100, rue St Dominique
F-75007 Paris (FR)

(72) Inventeur : Guigan, Jean
9, rue Jean Mermoz
F-75008 Paris (FR)
Inventeur : Guigan, Franck
100, rue St Dominique
F-75007 Paris (FR)

(74) Mandataire : Weinmiller, Jürgen et al
Lennéstrasse 9 Postfach 24
W-8133 Feldafing (DE)

## Description

La présente invention concerne un magasin linéaire de stockage et de distribution automatique applicable à des produits mis de préférence en boîtes parallélépipédiques.

On connaît par le brevet français n° 2138272 un magasin de stockage linéaire comprenant au moins un module comportant une pluralité de tiroirs verticaux disposés les uns à côté des autres et divisés en compartiments verticaux contenant chacun un empilement de boîtes d'un même type. Chaque tiroir est mobile en translation horizontale pour sortir du module et amener ainsi un compartiment vertical déterminé hors du module.

Les deux parois latérales du tiroir présentent dans chaque compartiment deux ouvertures en regard l'une de l'autre pour le passage de la boîte située à la base de l'empilement ; ces ouvertures communiquent avec une fente pratiquée dans la base du tiroir et parallèle à la direction d'un convoyeur commun à tous les compartiments du module et portant un éjecteur.

La sortie d'une boîte est due à la combinaison de deux mouvements orthogonaux : sortie du tiroir du module et passage de l'éjecteur sous le tiroir dans la fente du compartiment choisi.

Un tel dispositif donne toute satisfaction pour le stockage et la distribution de produits peu encombrants et pesant quelques grammes, comme par exemple les produits pharmaceutiques.

La mise en oeuvre de tels tiroirs avec une pluralité de compartiments s'adapte mal au stockage et à la distribution de boîtes de taille et d'encombrement plus importants car elle représente un coût financier élevé, et ne permet pas une cadence de distribution suffisante pour certains besoins de vente en gros de produits pharmaceutiques.

Le document DE-A-2226769 décrit un magasin linéaire de stockage selon le préambule de la revendication 1. Les moyens d'extraction d'un objet de ce magasin sont compliqués et encombrants. Le but de l'invention est de simplifier la structure de ces moyens d'extraction en vue de les rendre plus fiables et moins encombrants et en vue d'en réduire le coût de la fabrication.

Ce but est atteint selon l'invention par le magasin tel que défini dans la revendication 1. En ce qui concerne des caractéristiques de certaines réalisations préférées, référence est faite aux sous-revendications.

L'invention sera décrite ci-après plus en détail à l'aide de quelques modes de réalisation donnés à titre illustratif mais nullement limitatif. Dans le dessin annexé :

— La figure 1 est une vue très schématique en perspective d'un magasin selon l'invention.

— La figure 2 est une vue en élévation et de côté d'un magasin de la figure 1 montrant très schématiquement deux casiers selon l'invention.

— La figure 3 est un schéma vu de dessus montrant les dispositions relatives de la courroie dentée et des chaînes qu'elle est susceptible d'entraîner.

— La figure 4 est une vue partielle schématique en élévation d'un module formé de casiers avec leur convoyeur d'évacuation commun.

— La figure 5 est une vue schématique en perspective d'un maillon de la chaîne de la cartouche d'éjection.

— La figure 6 est une vue schématique en perspective d'un maillon à taquet sans dent d'engrènement appartenant à la chaîne de la cartouche d'éjection.

— La figure 7 est une vue schématique de côté d'une variante de cartouche d'éjection selon l'invention, en position de repos.

— La figure 8 est une vue schématique analogue à la figure 7, la cartouche étant en position de travail.

— La figure 9 est une variante de mise en oeuvre d'un magasin selon l'invention pour le stockage et la distribution de blisters.

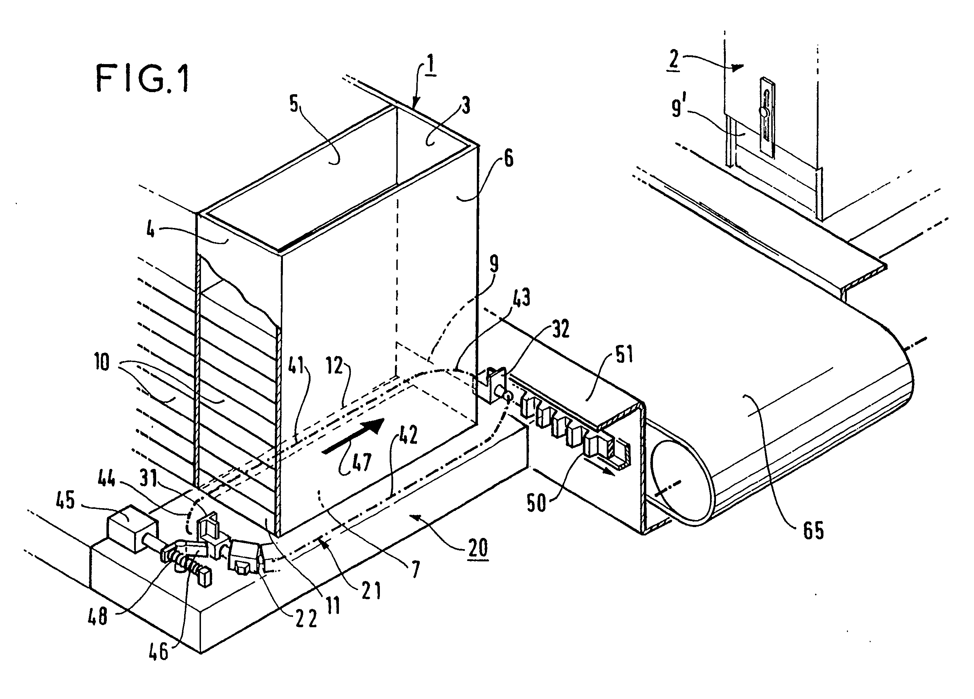

On voit dans la figure 1 en perspective un magasin dont on n'a illustré que deux casiers 1 et 2. Le casier 1 parallélépipédique, constitué par de simples guides en tôle d'acier, présente une face avant 3, une face arrière 4, deux parois latérales 5, 6 et un fond 7. Ce casier contient un empilement 10 de boîtes parallélépipédiques. La paroi avant 3 est munie au niveau du fond 7 d'une ouverture 9 pour le passage de la boîte 11 située au bas de l'empilement 10. Une fente 12 parallèle aux parois 5 et 6 est prévue dans le fond 7 entre les faces 3 et 4.

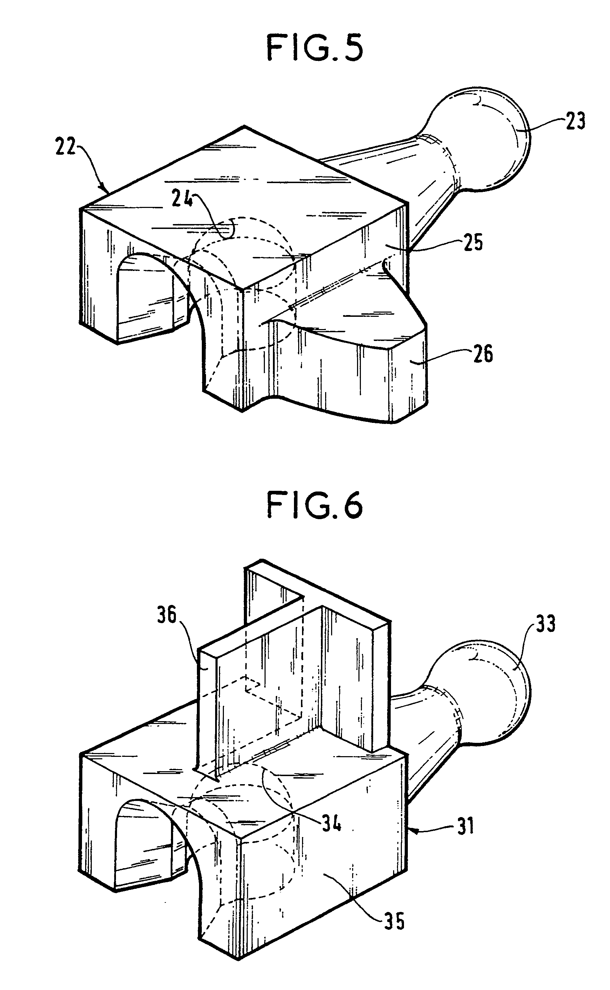

Le casier 1, comme le casier 2, est muni sous son fond d'une cartouche d'éjection 20. Elle comprend une chaîne 21 dont les éléments apparaissent plus clairement dans les figures 5 et 6.

La chaîne 21 est formée essentiellement de maillons 22 (cf figure 5) ; chaque maillon 22 est réalisé de préférence en matière plastique glissant bien et s'usant peu, tel que le nylon par exemple ; il coopère avec les maillons 22 adjacents par un emboîtement de type rotule 23 — cavité 24. Il porte sur sa face latérale extérieure 25 une dent d'engrènement 26.

La chaîne 21 présente en outre deux maillons éjecteurs 31, 32 identiques entre eux, mais différents des maillons 22. En position de repos ils sont situés de manière à être diamétralement opposés (cf figure 1). Le maillon 31 visible dans la figure 6 coopère avec les deux maillons adjacents par le même système de type rotule

2

33 — cavité 34, mais sa paroi latérale extérieure 35 est lisse et sa paroi supérieure porte un taquet d'éjection 36.

La chaîne de la figure 1 coulisse dans une rampe fermée non illustrée ; elle présente deux portions rectilignes référencées 41 et 42, la portion 42 étant en déclivité par rapport à la portion 41, de manière qu'un taquet éjecteur puisse être escamoté en hauteur sous le fond 7 ; les portions rectilignes 41 et 42 sont réunies par deux portions sensiblement circulaires 43 et 44.

La cartouche d'éjection 20 comporte enfin des moyens 45, 46 pour déplacer le maillon d'éjection 31 d'un cran, dans le sens de la flèche 47, comme on en verra l'intérêt plus loin. Ces moyens sont constitués d'un électro-aimant 45 agissant sur un bras 46 associé à un ressort 48.

Le magasin selon l'invention comporte encore une courroie dentée 50 maintenue dans un logement 51 et située au niveau de la face 3 au droit des dents 26 des maillons 22 de la chaîne 21. Cette courroie dentée est d'une technologie similaire à celle mise en oeuvre pour la réalisation des courroies dentées utilisées pour l'entraînement des alternateurs des automobiles. Elle est de préférence réalisée en matériau de synthèse souple, renforcé d'une toile résistant bien à la traction.

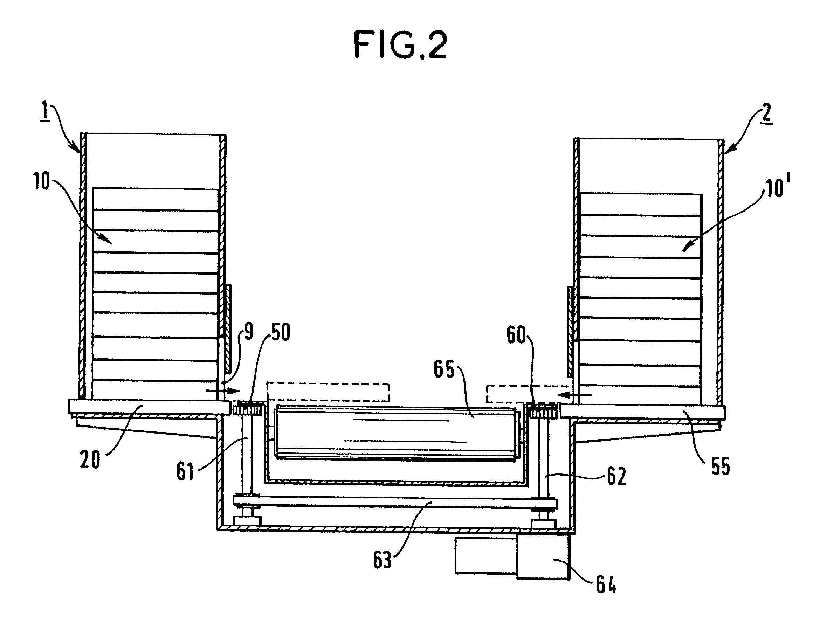

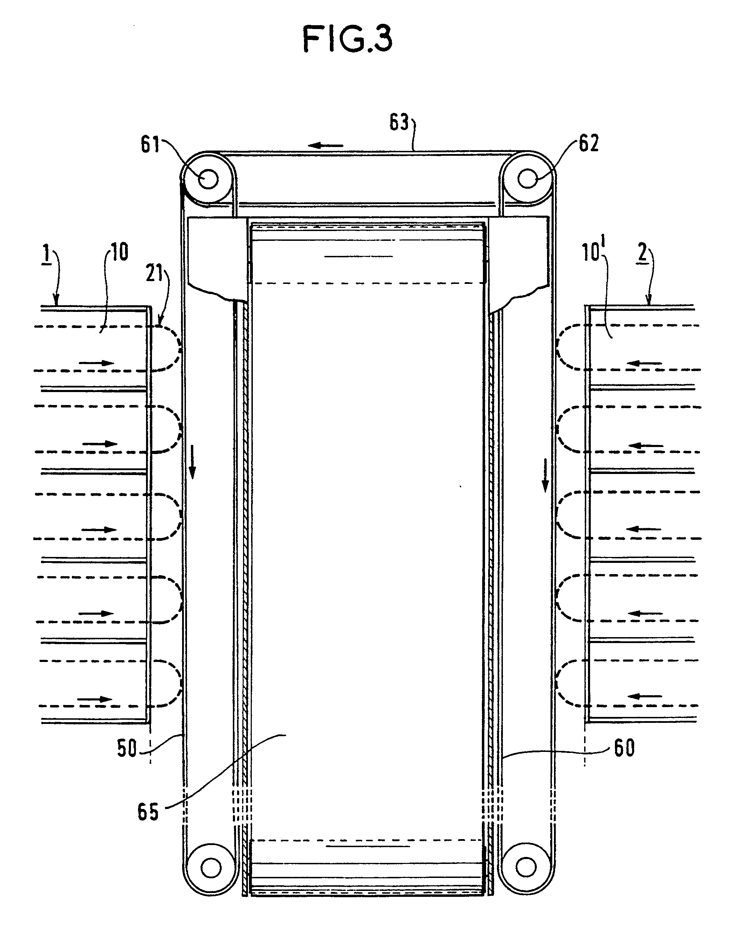

On retrouve dans la figure 2 les casiers 1 et 2 avec leurs empilements de boîtes 10 et 10', leurs cartouches d'éjection 20 et 55 associées aux courroies dentées 50 et 60 qui sont entraînées par des axes 61 et 62 reliés par une courroie de transmission 63, l'ensemble étant mis en mouvement par un moteur 64. Cette disposition apparaît schématiquement dans la figure 3, et il est clair qu'un seul moteur 64 peut entraîner en permanence une courroie dentée susceptible de coopérer avec tous les casiers. Un convoyeur d'évacuation 65 est prévu parallèlement aux courroies d'entraînement 50 et 60.

Un magasin selon l'invention fonctionne de la façon suivante :

En position de repos, illustrée dans la figure 1, les deux maillons éjecteurs 31 et 32 se trouvent en position diamétralement opposées et le maillon 32 qui ne porte pas de dent latérale ne peut être entraîné par la courroie dentée 50 qui circule en permanence.

En cas de commande d'éjection pour l'extraction de la boîte 11, on agit sur l'électroaimant 45 dont le bras 46 pousse le maillon d'éjection 31 d'un cran dans le sens de la flèche 47 ; le maillon 32 se déplace donc aussi d'un cran et les maillons 22 peuvent alors être entraînés par la courroie dentée 50. Le maillon éjecteur 31 passe dans la fente 12, et pousse la boîte 11 jusqu'à ce qu'elle traverse la fente 9 et se retrouve sur le convoyeur d'évacuation 65. Le maillon 31 se trouve alors dans la position initiale du maillon 32 et l'entraînement de la chaîne 21 s'arrête automatiquement.

Grâce à la déclivité de la rampe qui guide la chaîne 21 dans la zone 42, le maillon 32 est escamoté pendant le trajet du maillon 31.

La souplesse de la courroie 50 doit être suffisante pour que chacune de ces dents puisse s'écraser sous la pression d'une dent d'engrènement 26 d'un maillon 22, et ceci dans le cas fréquent où la dent 26 s'engagerait en conflit avec la courroie 50.

Selon une autre réalisation, les dents de la courroie 50 n'ont pas une telle souplesse en elles-mêmes ; on prévoit alors latéralement entre la courroie 50 et son logement 51 une mousse souple qui compense la ridigité de la courroie en cas de conflit avec les dents d'engrènement 26, comme indiqué précédemment.

On aurait un fonctionnement équivalent si les deux maillons éjecteurs 31 et 32 portaient une dent latérale et si deux maillons 22 situés à proximité de ces deux maillons n'en portaient pas. On aurait alors trois types différents de maillons.

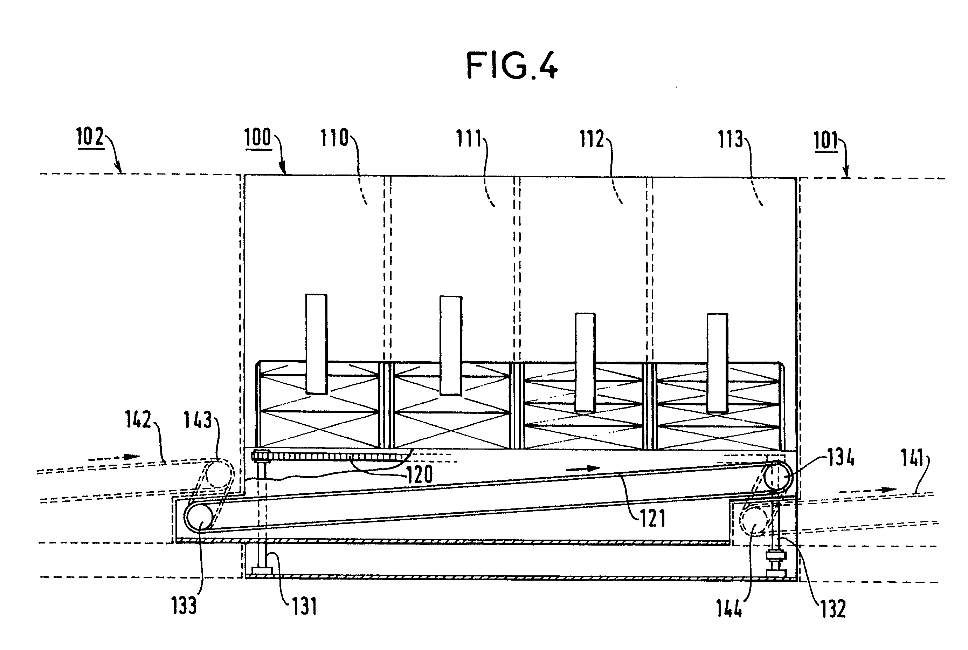

Dans la variante de réalisation illustrée dans la figure 4, on voit un magasin 100 selon l'invention avec des casiers juxtaposés 110, 111, 112, 113, leur courroie dentée commune 120 entraînée par des axes 131 et 132, et un convoyeur d'évacuation commun 121 entraîné au niveau des axes 133 et 134.

Des magasins 101 et 102 analogues au magasin 100 peuvent être juxtaposés avec un couplage de leurs convoyeurs d'évacuation 141 et 142 entraînés autour des axes 143 et 144 couplés respectivement aux axes 133 et 134. On peut donc mettre en oeuvre un nombre quelconque de magasins selon l'invention avec des casiers en nombre quelconque et des boîtes de dimensions très variées.

L'ensemble est piloté par un ordinateur de commande.

A titre d'exemple pratique, on donne ci-dessous les dimensions en centimètres des différents éléments du dispositif :

|  | hauteur | longueur | largeur |
|---|---|---|---|
| magasin | 180 | 600 | 80 |
| casier | 120 | 20 | 10 |
| chaîne (longueur totale) |  | 60 |  |
| tapis d'éjection |  | 600 | 30 |
| maillons |  | 0,6 à 2 |  |

Dans ce cas, on a deux rangées de 60 casiers, c'est-à-dire un total de 120 casiers.

Pour une vitesse de la courroie dentée 50 égale à 750 cm par minute, le nombre maximal d'éjections par casier est de 37,5 par minute, soit 4500 éjections par minute pour le magasin complet.

Les produits concernés peuvent être : cassettes audio et vidéo, disques numériques, livres, journaux et périodiques, paquets de cigarettes, médicaments, composants électroniques, pièces détachées, produits alimentaires, produits textiles pour l'habillement, accessoires du vêtement, montres, chaussures, cosmétiques, bagages, etc...

On peut éjecter des produits allant jusqu'à 20 kg, cette valeur correspondant également à la limite d'utilisation des tapis roulants.

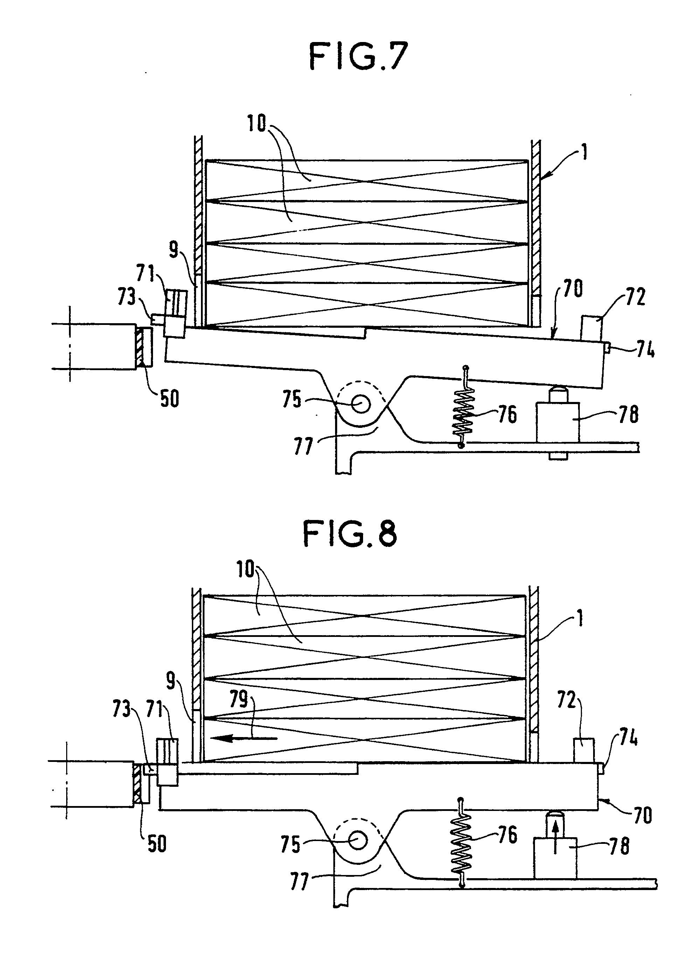

On a illustré schématiquement dans les figures 7 et 8 une variante de réalisation de la cartouche d'éjection. Le casier 1 proprement dit est analogue à celui de la figure 1. La cartouche 70 contient une chaîne analogue à la chaîne 21 de la figure 1, sauf en ce qui concerne les maillons 71 et 72 portant les taquets d'éjection et une dent latérale d'engrènement 73, 74 tronquée vers le bas. L'ensemble de la cartouche est susceptible de pivoter en rotation autour d'une axe 75 parallèle à la courroie 50 entre une position de repos (figure 7) et une position de travail (figure 8). Un ressort 76 lie la cartouche 70 à un support 77, et un électro-aimant commandable 78 peut l'amener en position de travail.

On voit que, lorsque la cartouche est en position de repos, il n'est pas possible à la dent 73 de rencontrer la courroie dentée 50. Par contre dans la position de la figure 8 cet engrènement est possible ; la chaîne circule suivant la flèche 79 et le taquet du maillon 72 se met en mouvement pour éjecter un objet 10 par l'ouverture d'évacuation 9.

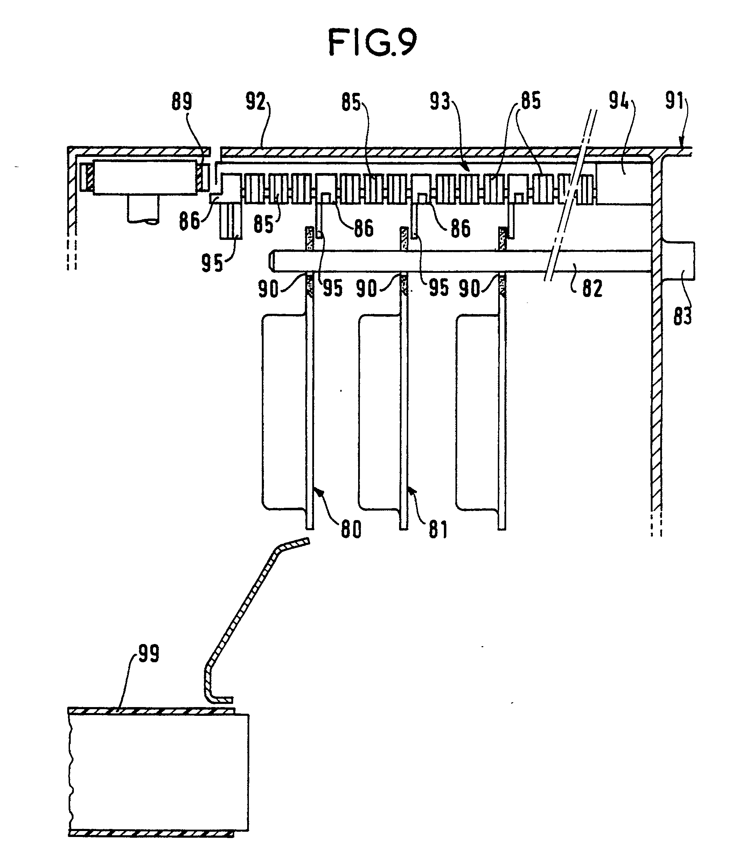

Le dispositif représenté très schématiquement dans la figure 9 permet le stockage et la distribution de blisters ou emballages analogues ; il peut s'agir par exemple de pinces comprimant le bord de sachets souples et enfilées comme les blisters 80, 81 par des orifices 90 sur une barre de guidage 82 fixée dans la paroi arrière 83 d'un casier 91. Au plafond 92 du casier 91 est fixée une cartouche d'éjection 93 munie d'un dispositif de commande 94 analogue à celui de la figure 1 ; il s'agit d'un électro-aimant muni d'un bras susceptible de faire avancer d'un cran une chaîne comprenant des maillons 85 analogues aux maillons 22 de la figure 1 et une pluralité de maillons 86 portant un taquet d'éjection 95, mais pas de dent d'engrènement latérale. Il y a un maillon 86 associé à chaque blister avec plusieurs maillons 85 intercalés entre deux maillons 86.

La cartouche 93 coopère avec la courroie dentée 89 analogue à celles qui ont été décrites jusqu'à présent.

On voit qu'en cas de commande par l'électro-aimant 94, la chaîne avance d'un cran, ce qui permet aux maillons 85 d'être entraînés par la courroie 89, et par là-même au maillon 86 associé au blister 80 de le pousser avec son taquet 95 jusqu'à ce qu'il soit dégagé de la barre 82. Le mouvement s'arrête dès que le maillon 86 suivant, sans dent latérale, arrive au droit de la courroie 89.

Le blister est évacué par le convoyeur 99.

Bien entendu l'invention n'est pas limitée aux modes de réalisation qui viennent d'être décrits. On pourra, sans sortir du cadre de l'invention, remplacer tout moyen par un moyen équivalent.

Les dispositifs selon l'invention peuvent par exemple s'appliquer à la distribution directe des produits à un client, ou à la préparation de commande dans de grands centres de vente en gros.

**Revendications**

1. Magasin de stockage et de distribution automatique d'objets en boîtes, commandé par un ordinateur programmé, comportant au moins une pluralité de casiers (1) juxtaposés formant une structure linéaire, globalement parallélépipédique, chaque casier étant destiné à stocker, soit un empilement de boîtes (10), soit une file de boîtes ou blisters (80, 81) ou équivalents, et présentant une ouverture d'évacuation (9) sur la face avant de ladite structure linéaire pour laisser le passage à une seule boîte (11), chaque casier comprenant dans son fond ou dans son plafond une cartouche d'éjection (20) d'une boîte qu'il contient, cette cartouche d'éjection

4

EP 0 314 102 B1

comprenant une chaîne à maillons (21) porteuse d'au moins un moyen (31, 32) susceptible de pousser ladite boîte (11) jusqu'à ladite ouverture (9) d'évacuation lorsque ladite chaîne (21) est mise en mouvement, un convoyeur (65) étant prévu parallèlement à ladite structure pour l'évacuation de ladite botte (11), caractérisé par le fait que ladite cartouche d'extraction (20) comprend en outre des moyens de commande d'extraction pour engréner ladite chaîne avec une courroie dentée (50) située parallèlement à la face avant de ladite structure linéaire, au droit des cartouches d'extraction, associée à des moyens pour l'entraîner constamment dans un mouvement de translation.

2. Magasin selon la revendication 1, caractérisé par le fait que chaque casier destiné à contenir un empilement de boîtes présente deux faces latérales (5, 6), une face avant (3) munie d'une ouverture (9) pour le passage de la boîte située à la base de l'empilement (10), une face arrière (4), et un fond (7) avec une fente (12) entre la face avant et la face arrière, qu'il est muni sous son fond (7) de ladite cartouche d'éjection (20) comprenant une chaîne (21) à maillons (22) coulissant dans une rampe fermée présentant deux portions (41, 42) rectilignes, dont l'une (42) en déclivité, et réunies par deux demi-cercles (43, 44), chaque maillon (22) présentant sur sa face latérale extérieure une dent d'engrènement (26) à l'exception de deux maillons diamétralement opposés qui sont munis d'un taquet d'éjection (31, 32) susceptible de passer dans ladite fente (12), un moyen de commande d'extraction (45, 46) étant prévu au niveau de ladite face arrière pour faire avancer d'un cran un maillon porteur de taquet (31).

3. Magasin selon la revendication 1, caractérisé par le fait que chaque casier (1) destiné à contenir un empilement de boîtes (10) présente deux faces latérales (5, 6), une face avant (3) munie d'une ouverture (9) pour le passage de la boîte (11) située à la base de l'empilement (10), une face arrière (4), et un fond (7) avec une fente (12) entre la face avant (3) et la face arrière (4), qu'il est muni sous son fond d'une cartouche d'éjection (70) mobile en rotation autour d'un axe (75) parallèle à ladite courroie crantée (50) entre une position de repos et une position de travail, position commandée par un électro-aimant (78), la chaîne (21) contenue dans ladite cartouche (70) comportant deux maillons (71, 72) dont la dent latérale d'engrènement (73, 74) est tronquée de manière à ne pas coopérer avec ladite courroie (50) lorsque la cartouche est en position de repos, et inversement lorsqu'elle est en position de travail.

4. Magasin selon la revendication 1, caractérisé par le fait que chaque casier (91) destiné à contenir une file de blisters (81) sur une tige (82) fixée sur sa face arrière (83) comporte dans son plafond (92) une cartouche d'éjection (93) comprenant une chaîne formée de maillons (85) à dent d'engrènement latérale et d'une pluralité de maillons (86) sans dent, un par blister, mais portant un taquet d'éjection (95), un moyen de commande d'extraction (94) étant prévu au niveau de ladite face arrière pour faire avancer d'un cran un maillon (86) porteur de taquet (95).

5. Magasin selon la revendication 1, caractérisé par le fait que le moyen d'entraînement (133) de son convoyeur d'évacuation (121) est susceptible d'être couplé au moyen d'entraînement (143) du convoyeur d'évacuation (142) d'un magasin analogue juxtaposé (102).

6. Magasin selon l'une des revendications précédentes, caractérisé par le fait que ladite courroie dentée (50) est réalisée en un matériau de souplesse suffisant pour que chacune de ses dents puisse s'écraser sous la pression d'une dent d'un maillon.

7. Magasin selon l'une des revendications précédentes, caractérisé par le fait que lesdits maillons (22) coopèrent entre eux par un emboîtement à rotule (23-24).


## Patentansprüche

1. Magazin zur Speicherung und automatischen Ausgabe von Gegenständen in Schachteln, das von einem programmierten Rechner gesteuert wird und mindestens eine Vielzahl von Kästen (1) aufweist, die nebeneinander angeordnet eine global parallelepipedische lineare Struktur bilden, wobei jeder Kasten zum Speichern entweder eines Stapels von Schachteln (10), oder einer Reihe von Schachteln oder Blisterpackungen (80, 81) oder entsprechenden Behältnissen dient und an der Vorderseite der linearen Struktur eine Entladeöffnung (9) für den Durchtritt einer einzelnen Schachtel (11) aufweist, wobei jeder Kasten in seinem Boden oder in seiner Decke eine Ausstoßkartusche (20) für eine darin befindliche Schachtel aufweist, und die Ausstoßkartusche eine Gliederkette (21) besitzt, die mindestens ein Mittel (31, 32) zum Verschieben des Schachtel (11) bis zur Entladeöffnung (9) trägt, wenn die Kette (21) in Bewegung versetzt wird, wobei ein Förderband (65) parallel zu der Struktur zum Abführen der Schachtel (11) vorgesehen ist, dadurch gekennzeichnet, daß die Entnahmekartusche (20) weiter Entnahmesteuermittel aufweist, die den Eingriff der Kette mit einem Zahnriemen (50) bewirken, welcher parallel zur Vorderseite der linearen Struktur gegenüber den Entladekartuschen angeordnet und Mitteln zugeordnet ist, die ihn fortlaufend in einer Translationsbewegung antreiben.

2. Magazin nach Anspruch 1, dadurch gekennzeichnet, daß jeder zur Aufnahme eines Schachtelstapels

5

bestimmter Kasten zwei Seitenflächen (5, 6) eine Vorderfläche (3) mit einer Öffnung (7) für den Durchtritt der am Boden des Stapels (10) befindlichen Schachtel, eine Rückfläche (4), und einen Boden (7) mit einem Schlitz (12) zwischen der Vorderfläche und der Rückfläche aufweist, daß der Kasten unter seinem Boden (7) mit der Ausstoßkartusche (20) versehen ist, welche eine Kette (21) aus Gliedern (22) aufweist, die in einer geschlossenen Rampe mit zwei geradlinigen Abschnitten (41, 42) gleitet, von denen einer (42) schräg verläuft, und die beide durch zwei Halbkreise (43, 44) verbunden sind, wobei jedes Glied (22) an seiner äußeren Seitenfläche einen Eingriffszahn (26) mit Ausnahme von zwei einander diametral gehenüberstehenden Glieder besitzt, die mit einem Ausstoßanschlag (31, 32) ausgestattet sind und in den Schlitz (12) eintreten, wobei im Bereich der Rückfläche ein Entnahmesteuermittel (45, 46) vorgesehen ist, um ein einen Anschlag tragendes Glied (31) um einen Zahn nach vorne zu bewegen.

3. Magazin nach Anspruch 1, dadurch gekennzeichnet, daß jeder zur Aufnahme eines Schachtelstapels bestimmter Kasten zwei Seitenflächen (5, 6) eine Vorderfläche (3) mit einer Öffnung (7) für den Durchtritt des am Boden des Stapels (10) befindlichen Schachtel, eine Rückfläche (4), und einen Boden (7) mit einem Schlitz (12) zwischen der Vorderfläche (3) und der Rückfläche aufweist, und daß das Magazin unter seinem Boden mit einer Ausstoßkartusche (70) ausgestattet ist, die um eine parallel zum Zahnriemen (50) verlaufende Achse (75) zwischen einer Ruhestellung und einer Arbeitsstellung drehbeweglich ist, wobei die jeweilige Position durch einen Elektromagneten (78) ansteuerbar ist und die in der Kartusche (70) enthaltene Kette (21) zwei Glieder (71, 72) aufweist, deren seitlicher Eingriffszahn (73, 74) angestumpft ist, derart, daß er nicht mit dem Zahnriemen (50) zusammenwirken kann, wenn sich die Kartusche in der Ruhestellung befindet, im Gegensazt zu dem Fall, wenn die Kartusche sich in der Arbeitsstellung befindet.

4. Magazin nach Anspruch 1, dadurch gekennzeichnet, daß jeder Kasten (91), der zur Aufnahme einer Reihe von Blisterpackungen (81) auf einer an seiner Rückwand (83) befestigten Stange (82) bestimmt ist, in seiner Decke (92) eine Ausstoßkartusche (93) mit einer Kette aus Gliedern (85) mit seitlichem Eingriffszahn und einer Vielzahl von Gliedern (86) ohne Zahn, aber mit einem Ausstoßanschlag (95) aufweist, und zwar ein einzelnes solches Glied je Blisterpackung, wobei ein Entnahmesteuermittel (94) im Bereich der Rückfläche (94) vorhanden ist, um ein den Anschlag (95) tragendes Glied (86) um einen Zahn weiterzubewegen.

5. Magazin nach Anspruch 1, dadurch gekennzeichnet, daß das Antriebsmittel (133) seines Entnahmeförderbands (121) an das Antriebsmittel (143) des Entnahmeförderbands (142) eines benachbarten gleichartigen Magazins (102) ankuppelbar ist.

6. Magazin nach einem der vorhergehenden Ansprüche, dadurch gekennzeichnet, daß der Zahnriemen (50) aus einem genügend elastischen Material besteht, damit jeder seiner Zähne durch Druck eines Zahnes eines Kettenglieds weggedrückt werden kann.

7. Magazin nach einem der vorhergehenden Ansprüche, dadurch gekennzeichnet, daß die Glieder (22) durch eine Kugel-Zapfenverbindung (23-24) in wechselseitiger Arbeitsverbindung stehen.

## Claims

1. A magazine for storing and automatically dispensing objects in boxes, controlled by a programmed computer and comprising at least one plurality of juxtaposed bins (1) ocnstituting a linear structure which is generally rectangular in shape, each bin being intended to store either a stack of boxes (10), or a line of blister packs (80, 81) or the like, and having an evacuation opening (9) in a front face of said linear structure suitable for passing out a single box (11), each bin including an ejector cartridge (20) in the bottom or the top thereof, for ejecting a box contained therein, said cartridge comprising a chain of links (21) including at least one means (31, 32) suitable fo rejecting said box (11) through said evacuation opening (9) when said chain (21) is set in motion, and a conveyor (65) being provided parallel to said structure for removing said box (11), characterized in that said ejector cartridge (20) further includes extraction control means adapted to mesh said chain with a cog belt (50) situated parallel to the front face of said linear structure level with the ejector cartridges and associated with means for being constantly driven in translation motion.

2. A magazine according to claim 1, characterized in that each bin for containing a stack of boxes has two side faces (5, 6), a front face (3) provided with an opening (9) for passing out the box situated at the bottom of the stack (10), a rear face (4), and a bottom (7) with a slot (12) running between the front face and rear face, that the magazine is provided beneath its bottom (7) with said ejector cartridge (20) comprising a chain (21) having links (22) sliding around a closed ramp having two rectilinear portions (41, 42), one of which (42) is inclined, said linear portions being interconnected by two semi-circular portions (43, 44), with each link (22) having a meshing tooth (26) on its outer side face except for two diametrically opposite links which are provided with respective ejector pegs (31, 32) suitable for passing along said slot (12), with extractor control means (45, 46) being provided near said rear face for causing a peg-carrying link (31) to advance by one notch.

3. A magazine according to claim 1, characterized in that each bin (1) for containing a stack (10) of boxes has two side faces (5, 6), a front face (3) provided with an opening (9) for passing out the box (11) situated at the bottom of the stack (10), a rear face (4), and a bottom (7) with a slot (12) running between the front face and rear face, said bin being provided beneath its bottom with an ejector cartridge (70) which is rotatable about an axis (75) parallel to said cog belt (50) between a rest position and a working position, said position being controlled by an electromagnet (78), the chain (21) contained in said cartridge (70) including two links (71, 72) whose lateral meshing teeth (73, 74) are truncated so as to avoid co-operating with said cog belt (50) when the cartridge is in its rest position, but to co-operate therewith when the cartridge is in its working position.

4. A magazine according to claim 1, characterized in that each bin (91) intended to contain a row of blister packs (81) on a rod (82) fixed to the rear face (83) of the bin contains an ejector cartridge (93) in its ceiling (92), said cartridge comprising a chain constituted by links (85) having respective lateral meshing teeth, and by a plurality of toothless links (86), with one toothless link per blister, but carrying an ejector peg (95), with extraction control means (94) being provided in the vicinity of said rear face to advance a peg-carrying link (86) by one notch.

5. A magazine according to claim 1, characterized in that the drive means (133) of its evacuation conveyor (121) is suitable for being coupled to the drive means (143) of the evacuation conveyor (142) of a juxtaposed analogous magazine (102).

6. A magazine according to any preceding claim, characterized in that said cog belt (50) is made of a substance which is sufficiently flexible for each of the teeth to be capable of being crushed under the pressure of the meshing tooth of one of the links.

7. A magazine according to any preceding claim, characterized in that said links (22) co-operate with one another by a ball and socket-type connection (23-24).

7

FIG.1

# FIG.2

EP 0 314 102 B1

# FIG.3

# FIG.4

EP 0 314 102 B1

# FIG.5

# FIG.6

## FIG.7

## FIG.8

# FIG.9